# EUROPEAN PATENT APPLICATION

(11) **EP 4 749 755 A1**
(43) Date of publication of application: **27.05.2026**
(21) Application number: 25210061.5
(22) Date of filing: 21.10.2025
(51) Int. Cl.: H01M 10/36

(54) **AQUEOUS BATTERY**

(30) Priority: 20.11.2024 JP 2024202294
(71) Applicant: TOYOTA JIDOSHA KABUSHIKI KAISHA, Toyota-shi, Aichi-ken 471-8571 (JP)
(72) Inventor: SUYAMA, Hiroshi, Toyota-shi, 471-8571 (JP)
(74) Representative: Kuhnen & Wacker Patent- und Rechtsanwaltsbüro PartG mbB

(57) **Abstract**

Disclosed is a technology where, when a current collector containing Al is used in an aqueous battery, elution of Al from the current collector into an aqueous electrolyte solution can be suppressed. The aqueous battery of the present disclosure includes a positive electrode, an aqueous electrolyte solution, and a negative electrode. One or both of the positive electrode and the negative electrode has/have a current collector containing Al. The current collector is in contact with the aqueous electrolyte solution. The aqueous electrolyte solution contains water, potassium polyphosphate dissolved in the water, and a silicic acid salt dissolved in the water.

## Description

### TECHNICAL FIELD

The present application discloses an aqueous battery.

### BACKGROUND ART

PTL 1 and PTL 2 each disclose an aqueous electrolyte solution including water and potassium pyrophosphate dissolved in the water. When an aqueous battery is formed with the aqueous electrolyte solution disclosed in PTL 1 and PTL 2, decomposition of the aqueous electrolyte solution on the surface of an electrode is easily suppressed even when the aqueous battery is charged and discharged, because of wide potential window on the reduction side of the aqueous electrolyte solution.

### CITATION LIST

### PATENT LITERATURE

PTL 1 Japanese Unexamined Patent Publication No. 2024-032362
PTL 2 Japanese Unexamined Patent Publication No. 2019-220294

### SUMMARY

### TECHNICAL PROBLEM

When a current collector containing Al is used in an aqueous battery, Al is easily eluted from the current collector into an aqueous electrolyte solution when the battery is charged and discharged. The present application discloses a new technology which can inhibit Al from being eluted from a current collector into an aqueous electrolyte solution in an aqueous battery.

### SOLUTION TO PROBLEM

The present application discloses, as the aforementioned solution to problem, a plurality of aspects below.

### <Aspect 1>

An aqueous battery including a positive electrode, an aqueous electrolyte solution and a negative electrode, wherein
one or both of the positive electrode and the negative electrode has/have a current collector containing Al,
the current collector is in contact with the aqueous electrolyte solution, and the aqueous electrolyte solution contains
water,
potassium polyphosphate dissolved in the water, and
a silicic acid salt dissolved in the water.

### <Aspect 2>

The aqueous battery according to aspect 1, wherein
the silicic acid salt is a metasilicic acid salt.

### <Aspect 3>

The aqueous battery according to aspect 1, wherein
the silicic acid salt is potassium metasilicate.

### <Aspect 4>

The aqueous battery according to any one of aspects 1 to 3, wherein
the aqueous electrolyte solution contains at least one of orthophosphoric acid, metaphosphoric acid and carboxylic acid dissolved in the water.

### <Aspect 5>

The aqueous battery according to any one of aspects 1 to 4, wherein
the aqueous electrolyte solution contains the potassium polyphosphate dissolved at a concentration of 1 mol or more per 1 kg of the water.

### <Aspect 6>

The aqueous battery according to any one of aspects 1 to 5, wherein
the aqueous electrolyte solution has no freezing point at -40°C or higher.

### <Aspect 7>

The aqueous battery according to any one of aspects 1 to 6, wherein
the aqueous electrolyte solution does not involve salt precipitation when cooled from 0°C to - 40°C.

### <Aspect 8>

The aqueous battery according to any one of aspects 1 to 7, wherein
the aqueous electrolyte solution has a viscosity of 10 mPa·s or more and 400 mPa·s or less at 25°C.

### <Aspect 9>

The aqueous battery according to any one of aspects 1 to 8, wherein
a pH of the aqueous electrolyte solution is 3 or more and 13 or less.

### <Aspect 10>

The aqueous battery according to any one of aspects 1 to 9, wherein
at least the positive electrode has the current collector.

### <Aspect 11>

The aqueous battery according to any one of aspects 1 to 10, having a bipolar structure, wherein a positive electrode active material layer is formed on one side of the current collector and a negative electrode active material layer is formed on the other side of the current collector.

### ADVANTAGEOUS EFFECTS OF INVENTION

According to the aqueous battery of the present disclosure, it is easy to suppress elution of Al from a current collector to an aqueous electrolyte solution.

### BRIEF DESCRIPTION OF DRAWINGS

FIG. 1 schematically shows an example of a structure of an aqueous battery.
FIG. 2 schematically shows an example of a structure of an aqueous battery.
FIG. 3A shows a cyclic voltammogram in the case of the Al elution suppression effect rated as "A".
FIG. 3B shows a cyclic voltammogram in the case of the Al elution suppression effect rated as "B".
FIG. 3C shows a cyclic voltammogram in the case of the Al elution suppression effect rated as "C".
FIG. 3D shows a cyclic voltammogram in the case of the Al elution suppression effect rated as "D".
FIG. 4 shows a charge-discharge curve of an evaluation cell with an aqueous electrolyte solution according to Comparative Example 5.
FIG. 5 shows a charge-discharge curve of an evaluation cell with an aqueous electrolyte solution according to Example 48.

### DESCRIPTION OF EMBODIMENTS

One embodiment of the aqueous battery of the present disclosure will be described below with reference to the drawings, but the technology of the present disclosure is not limited to the following embodiments.

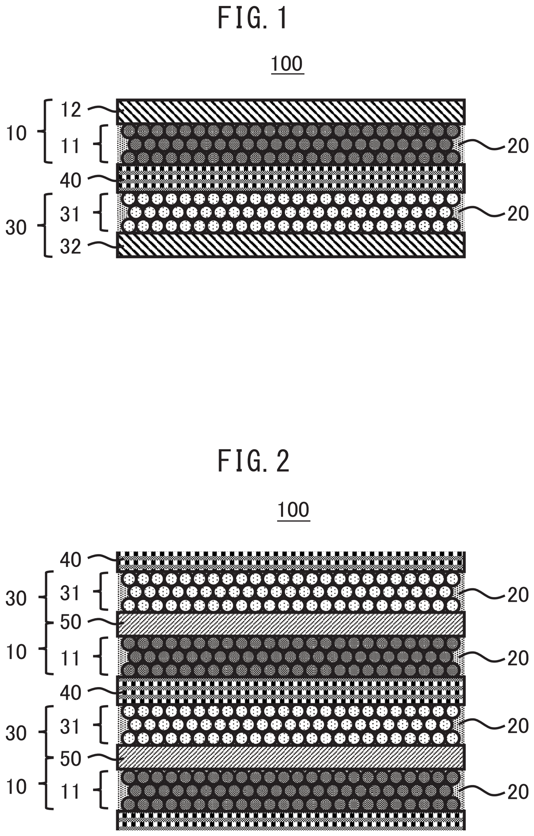

As shown in FIG. 1, an aqueous battery 100 according to one embodiment includes a positive electrode 10, an aqueous electrolyte solution 20, and a negative electrode 30. One or both of the positive electrode 10 and the negative electrode 30 has/have a current collector containing Al. The current collector is in contact with the aqueous electrolyte solution 20. The aqueous electrolyte solution 20 includes water, potassium polyphosphate dissolved in the water, and a silicic acid salt dissolved in the water.

### 1. Positive Electrode

It is possible to use, as the positive electrode 10, any known positive electrode for an aqueous battery. As shown in FIG. 1, the positive electrode 10 may include a positive electrode active material layer 11 and a positive electrode current collector 12.

### 1.1 Positive Electrode Active Material Layer

The positive electrode active material layer 11 contains a positive electrode active material. The positive electrode active material layer 11 is impregnated with the aqueous electrolyte solution 20. The positive electrode active material layer 11 may contain, in addition to the positive electrode active material, a conductive aid, a binder, and/or the like. The positive electrode active material layer 11 may also contain various other additives. The content of each component in the positive electrode active material layer 11 may be appropriately determined according to the objective battery performance. For example, the content of the positive electrode active material may be 40% by mass or more, 50% by mass or more, 60% by mass or more, or 70% by mass or more, and may be 100% by mass or less, or 90% by mass or less, based on 100% by mass of the entire positive electrode active material layer 11 (total solid content). The shape of the positive electrode active material layer 11 is not particularly limited, and the positive electrode active material layer may be, for example, a sheet-shaped positive electrode active material layer having an approximately flat surface. The thickness of the positive electrode active material layer 11 is not particularly limited, and may be, for example, 0.1 µm or more, 1 µm or more, or 10 µm or more, and may be 2 mm or less, 1 mm or less, or 500 µm or less.

Any substance capable of functioning as the positive electrode active material of the aqueous battery (for example, an aqueous battery with an aqueous electrolyte solution containing alkali metal ions such as lithium ions, sodium ions, or potassium ions, and/or protons) can be used as the positive electrode active material. The positive electrode active material has a higher charge-discharge potential than that of the below-mentioned negative electrode active material, and can be appropriately selected in consideration of the potential window and the like of the below-mentioned aqueous electrolyte solution 20. In the present embodiment, various ions derived from an aqueous electrolyte solution can serve as charge compensation ions. Specifically, charge compensation ions inserted and deinserted by the positive electrode active material may be, for example, one, or two or more of potassium ions, protons, electrolyte-derived anions, and hydroxide ions. The positive electrode active material may be any of various hydroxides or oxides, such as Ni(OH)₂ (e.g., Japanese Unexamined Patent Publication No. 2023-154313) being a layered nickel hydroxide compound, at least one of AₓK_{y}Ni_{1-z}M_{z}O_{2±δ}·nH₂O (wherein A is at least one of Li, Na, Rb, Cs, Mg, Ca, Sr, Ba and Sc, M is at least one of transition metal elements, 2A group elements, 3A group elements, 2B group elements and 3B group elements, relationships of 0 ≤ x < 0.5, 0 < y ≤ 0.5, 0 ≤ z ≤ 0.5, 0 < n ≤ 2, and (α·x) + y ≤ 0.5 are satisfied, α is a valence of the cation of A, e.g., Japanese Unexamined Patent Publication No. 2023-132287), a manganese spinel (for example, LiMn₂O₄), and a nickel-manganese-cobalt-containing composite oxide (NMC). The positive electrode active material may also be an alkali metal element-containing oxide, polyanions, or the like. More specifically, the positive electrode active material may also be a composite oxide of an alkali metal element and transition metal. The composite oxide may be at least one selected from alkali metal cobalt composite oxide (AmCoO₂, etc., "Am" is an alkali metal element, and the same applies to the following.), alkali metal nickel composite oxide (AmNiO₂, etc.), alkali metal nickel titanium composite oxide (AmNi_{1/2}Ti_{1/2}O₂, etc.), alkali metal nickel manganese composite oxide (AmNi_{1/2}Mn_{1/2}O₂, AmNi_{1/3}Mn_{2/3}O₂, etc.), alkali metal manganese composite oxide (AmMnO₂, AmMn₂O₄, etc.), alkali metal iron manganese composite oxide (Am_{2/3}Fe_{1/3}Mn_{2/3}O₂, etc.), alkali metal nickel cobalt manganese composite oxide (AmNi_{1/3}Co_{1/3}Mn_{1/3}O₂, etc.), alkali metal iron composite oxide (AmFeO₂, etc.), alkali metal chromium composite oxide (AmCrO₂, etc.), an alkali metal iron phosphate compound (AmFePO₄, etc.), an alkali metal manganese phosphate compound (AmMnPO₄, etc.), and an alkali metal cobalt phosphate compound (AmCoPO₄). Alternatively, the positive electrode active material may be an active material such as Prussian blue. Alternatively, the positive electrode active material may be at least one selected from alkali metal titanium composite oxide, TiO₂, and sulfur (S) which show a noble charge-discharge potential compared to the below-mentioned negative electrode active material. The positive electrode active material may be one which inserts and deinserts charge compensation ions by intercalation, or which inserts and deinserts charge compensation ions by a conversion reaction or an alloying reaction. Only one positive electrode active material may be used alone, or two or more thereof may be used in combination.

The shape of the positive electrode active material may be any shape capable of functioning as the positive electrode active material of the battery. For example, the positive electrode active material may be in the form of particles. The positive electrode active material may be a solid material, a hollow material, a material with voids, or a porous material. The positive electrode active material may be a primary particle, or a secondary particle obtained by agglomeration of a plurality of primary particles. The mean particle diameter D50 of the positive electrode active material may be, for example, 1 nm or more, 5 nm or more, or 10 nm or more, and may be 500 µm or less, 100 µm or less, 50 µm or less, or 30 µm or less. The mean particle diameter D50 in the present application is the particle diameter (median diameter) at 50% of the integrated value in the volume-based particle diameter distribution determined by the laser diffraction and scattering method.

Examples of the conductive aid which can be contained in the positive electrode active material layer 11 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.2 Positive Electrode Current Collector

As shown in FIG. 1, the positive electrode 10 may include a positive electrode current collector 12 in contact with the positive electrode active material layer 11. The positive electrode current collector 12 is in contact with an aqueous electrolyte solution 20. It is possible to use, as the positive electrode current collector 12, any material capable of functioning as the positive electrode current collector of the aqueous battery. When the below-mentioned negative electrode current collector 32 contains Al, the positive electrode current collector 12 may contain Al or may not contain Al. When the below-mentioned negative electrode current collector 32 does not contain Al, the positive electrode current collector 12 contains Al. As mentioned below, elution of Al from the current collector to the aqueous electrolyte solution particularly easily occurs on the positive electrode side which becomes the oxidation potential. According to the aqueous battery 100 of the present disclosure, even if the positive electrode current collector 12 contains Al, it is possible to suppress elution of Al from the positive electrode current collector 12 into the aqueous electrolyte solution 20. Namely, in the aqueous battery 100, at least the positive electrode 10 may have a current collector containing Al.

When the positive electrode current collector 12 contains Al, the entire positive electrode current collector 12 may be composed of Al, or at least a portion of the surface thereof may be composed of Al. For example, the positive electrode current collector 12 may be made of an Al foil, or the surface of a metal foil or some base material may be coated with Al. The positive electrode current collector 12 may be one in which Al is present on at least a portion of the surface in contact with the aqueous electrolyte solution 20, or one in which Al is present over the entire surface in contact with the aqueous electrolyte solution 20.

The positive electrode current collector 12 may be in the form of foil, plate, mesh, perforated metal, and foam. The positive electrode current collector 12 may be formed of a metal foil or a metal mesh. In particular, the metal foil is excellent in ease of handling or the like. The positive electrode current collector 12 may be composed of a plurality of foils. Examples of the metal material constituting the positive electrode current collector 12 include those containing at least one element selected from the group consisting of Cu, Ni, Al, V, Au, Pt, Mg, Fe, Ti, Pb, Co, Cr, Zn, Ge, In, Sn, and Zr. In particular, the positive electrode current collector 12 preferably contains Al, as mentioned above. The positive electrode current collector 12 may be one in which the above metal is plated or vapor-deposited on a metal foil or a base material. When the positive electrode current collector 12 is composed of a plurality of metal foils, the positive electrode current collector may have some layer between the plurality of metal foils. The thickness of the positive electrode current collector 12 is not particularly limited. For example, the thickness may be 0.1 µm or more, or 1 µm or more, and may be 1 mm or less, or 100 µm or less.

### 2. Aqueous Electrolyte Solution

The aqueous electrolyte solution 20 includes water, potassium polyphosphate dissolved in the water, and a silicic acid salt dissolved in the water. The aqueous electrolyte solution 20 may be in contact with the above-mentioned positive electrode current collector 12, may be included in the above-mentioned positive electrode active material layer 11, may be in contact with the below-mentioned negative electrode current collector 32, may be included in the below-mentioned negative electrode active material layer 31, and may be held between the positive electrode 10 and the negative electrode 30 by the separator 40.

### 2.1 Solvent

The aqueous electrolyte solution 20 contains water as a solvent. The solvent contains water as a main component. Namely, water accounts for 50 mol% or more and 100 mol% or less of the total amount of the solvent constituting the aqueous electrolyte solution (100 mol%). Water may account for 70 mol% or more, 90 mol% or more, or 95 mol% or more of the total amount of the solvent. Meanwhile, the upper limit of the proportion of water in the solvent is not particularly limited. The solvent may be composed only of water (100 mol% water).

The solvent may contain, in addition to water, any solvent other than water, for example, from the viewpoint of forming solid electrolyte interphase (SEI) on the surface of the active material, as long as the above problems can be solved. Examples of solvents other than water include one or more organic solvents selected from ethers, carbonates, nitriles, alcohols, ketones, amines, amides, sulfur compounds, and hydrocarbons. The solvents other than water may account for 50 mol% or less, 30 mol% or less, 10 mol% or less, or 5 mol% or less of the total amount of solvents constituting the electrolyte solution (100 mol%).

### 2.2 Electrolyte

An electrolyte is dissolved in the aqueous electrolyte solution 20, and the electrolyte may dissociate into cations and anions in the aqueous electrolyte solution 20. In the aqueous electrolyte solution 20, such cations and anions may form aggregates (associations).

### 2.2.1 Potassium Polyphosphate

The aqueous electrolyte solution 20 contains potassium polyphosphate dissolved in the water. "Potassium polyphosphate" refers to a salt of pyrophosphoric acid which may have at least some hydrogen substituted by potassium. Namely, "potassium polyphosphate" is classified as a concept encompassing potassium hydrogen pyrophosphate. Specific examples of the potassium polyphosphate include potassium pyrophosphate (K₄₋ₓHₓP₂O₇, x < 4), potassium tripolyphosphate (K_{5-y}H_{y}P₃O₁₀, y < 5), and the like. In particular, when potassium pyrophosphate (K₄₋ₓHₓP₂O₇, x < 4) is used as the potassium polyphosphate, much higher performance is easily ensured. In the aqueous electrolyte solution 20, "potassium polyphosphate dissolved in water" may be present as potassium ions, pyrophosphate ions or aggregates (associations) of these ions, or aggregates (associations) with ions derived from any of the below-mentioned potassium hydrogen phosphate, phosphoric acid, pyrophosphoric acid and carboxylic acid. In the aqueous electrolyte solution 20, "concentration of potassium polyphosphate dissolved in water" can be specified by converting ions, aggregates (associations), and the like contained in the aqueous electrolyte solution 20 into potassium polyphosphate. The "potassium polyphosphate dissolved in water" in the present application may be the above-mentioned ions or aggregates (associations) thereof, formed in the aqueous electrolyte solution 20 as a result of separate addition of a cation source (for example, potassium compound) and an anion source (for example, pyrophosphoric acid) to the aqueous electrolyte solution 20.

The concentration of the potassium polyphosphate in the aqueous electrolyte solution 20 is not particularly limited. According to the inventors' new findings, when the aqueous electrolyte solution 20 contains the potassium polyphosphate dissolved at a concentration of 1 mol or more per 1 kg of the water, particularly the potassium polyphosphate dissolved at a concentration of 1 mol or more and 6 mol or less per 1 kg of the water, still particularly the potassium polyphosphate dissolved at a concentration of 3 mol or more and 6 mol or less per 1 kg of the water, further particularly the potassium polyphosphate dissolved at a concentration of 4 mol or more and 6 mol or less per 1 kg of the water, still further particularly the potassium polyphosphate dissolved at a concentration of 4 mol or more and 5 mol or less per 1 kg of the water, not only the Al elution suppression effect by the current collector, but also the effect of enhancing other properties of the electrolyte solution, such as electrochemical stability, can be expected. When the concentration of the potassium pyrophosphate in the aqueous electrolyte solution 20 is such a concentration, the aqueous electrolyte solution 20 having no freezing point at -40°C or higher is easily obtained. Meanwhile, when the aqueous electrolyte solution 20 contains the potassium polyphosphate dissolved at a concentration of 1 mol or more and 4 mol or less per 1 kg of the water, particularly the potassium polyphosphate dissolved at a concentration of 1 mol or more and 3 mol or less per 1 kg of the water, further particularly the potassium polyphosphate dissolved at a concentration of 1 mol or more and 2 mol or less per 1 kg of the water, the aqueous electrolyte solution 20 is easily lower in viscosity and higher in ion conductivity.

### 2.2.2 Silicic Acid Salt

The aqueous electrolyte solution 20 includes a silicic acid salt dissolved in the water. The "silicic acid salt" may be an orthosilicic acid salt or a metasilicic acid salt. In particular, when the silicic acid salt is a metasilicic acid salt, a more excellent Al elution suppression effect is easily obtained. The type of the cation constituting the silicic acid salt is not particularly limited. In the present embodiment, the Al elution suppression effect can be ensured by the anion constituting the silicic acid salt regardless of the type of the cation constituting the silicic acid salt. The cation constituting the silicic acid salt may be, for example, one, or two or more of alkali metal ions and alkaline earth metal ions. In particular, when the silicic acid salt is potassium silicate, particularly potassium metasilicate (K₂SiO₃), a more excellent Al elution suppression effect is easily obtained. In the aqueous electrolyte solution 20, "silicic acid salt dissolved in water" is not needed to completely dissociate into cations and silicate anions (SiO₃²⁻ or SiO₄⁴⁻), and may form various aggregates (associations), for example, aggregates (associations) with ions derived from the above-mentioned potassium polyphosphate or the below-mentioned other additive components. In the aqueous electrolyte solution 20, "concentration of the silicic acid salt dissolved in water" can be specified by converting ions, aggregates (associations), and the like contained in the aqueous electrolyte solution 20 into the silicic acid salt. The "silicic acid salt dissolved in water" in the present application may be ions which can be converted as the silicic acid salt, or aggregates (associations) thereof, which are generated in the aqueous electrolyte solution 20 as a result of separate addition of a cation source (for example, potassium compound) and an anion source (for example, orthosilicic acid or metasilicic acid) to the aqueous electrolyte solution 20.

The concentration of the silicic acid salt in the aqueous electrolyte solution 20 is not particularly limited. According to the inventors' new knowledge, as the concentration of the silicic acid salt in the aqueous electrolyte solution 20 is higher, the Al elution suppression effect is easily enhanced, whereas the pH of the aqueous electrolyte solution 20 can increase to have any influence on a reaction other than a battery reaction. The concentration of the silicic acid salt in the aqueous electrolyte solution 20 may be an appropriate concentration in consideration of the balance between the Al elution suppression effect and the pH. For example, the concentration of the silicic acid salt in the aqueous electrolyte solution 20 may be 1 ppm or more and 1000000 ppm or less, 10 ppm or more and 500000 ppm or less, or 100 ppm or more and 300000 ppm or less per 1 kg of the water.

2.2.3 Orthophosphoric Acid, Metaphosphoric Acid (Pyrophosphoric Acid) And Carboxylic Acid The pH of the aqueous electrolyte solution 20 containing the above-mentioned silicic acid salt easily increases. In this respect, the pH of the aqueous electrolyte solution 20 may be adjusted by adding various acids to the aqueous electrolyte solution 20. Such an acid may be an inorganic acid or an organic acid. For example, the aqueous electrolyte solution 20 may contain at least one of orthophosphoric acid, metaphosphoric acid (pyrophosphoric acid) and carboxylic acid dissolved in the water. According to the inventors' new findings, at least orthophosphoric acid, metaphosphoric acid (pyrophosphoric acid) and carboxylic acid can decrease the pH of the aqueous electrolyte solution 20 with the Al elution suppression effect by the above-mentioned potassium polyphosphate or silicic acid salt being ensured. The Al elution suppression effect may also be further enhanced by interaction with the above-mentioned potassium polyphosphate or the like. "Metaphosphoric acid (pyrophosphoric acid)" may be, for example, one or both of pyrophosphoric acid (H₄P₂O₇) and tripyrophosphoric acid (H₅P₃O₁₀). In particular, when pyrophosphoric acid (H₄P₂O₇) is used as the pyrophosphoric acid, much higher performance is easily ensured. "Carboxylic acid" may be monovalent carboxylic acid or polyvalent carboxylic acid, and may be, for example, acetic acid. In the aqueous electrolyte solution 20, "orthophosphoric acid (H₃PO₄) dissolved in water" may be present as H⁺, PO₄³⁻, or aggregates (associations) with ions derived from the above-mentioned potassium polyphosphate or the like, for example, ions such as KPO₄²⁻, HPO₄²⁻, K₂PO₄⁻, H₂PO₄⁻, and KHPO₄⁻, "metaphosphoric acid (pyrophosphoric acid) dissolved in water" may be present as H⁺, pyrophosphate anions, or aggregates (associations) with ions derived from the above-mentioned potassium polyphosphate, and "carboxylic acid dissolved in water" may be present as H⁺, carboxylate anions, or aggregates (associations) with ions derived from the above-mentioned potassium polyphosphate. In the aqueous electrolyte solution 20, ions, aggregates (associations), and the like contained in the aqueous electrolyte solution 20 can be converted into orthophosphoric acid, metaphosphoric acid, or carboxylic acid, thereby specifying "concentration of orthophosphoric acid in water", "concentration of metaphosphoric acid in water", or "concentration of carboxylic acid in water".

The concentration in the acid in the aqueous electrolyte solution 20 is not particularly limited, and may be appropriately adjusted depending on the objective pH. According to the inventors' new findings, an excellent Al elution suppression effect is obtained by dissolving not only potassium polyphosphate, but also orthophosphoric acid, metaphosphoric acid, or carboxylic acid in the aqueous electrolyte solution 20. In the aqueous electrolyte solution 20, the molar ratio of the total of orthophosphoric acid, metaphosphoric acid and carboxylic acid to potassium polyphosphate ([orthophosphoric acid + metaphosphoric acid + carboxylic acid]/potassium polyphosphate) may be, for example, more than 0 and 20.00 or less, more than 0 and 15.00 or less, more than 0 and 10.00 or less, more than 0 and 8.50 or less, more than 0 and 7.00 or less, more than 0 and 5.00 or less, more than 0 and 3.00 or less, or more than 0 and 1.00 or less.

### 2.2.4 Cation

The aqueous electrolyte solution 20 may contain potassium ions as cations. In the aqueous electrolyte solution 20, some of potassium ions contained in the aqueous electrolyte solution 20 can be converted as "potassium polyphosphate dissolved". Herein, the aqueous electrolyte solution 20 may contain more potassium ions than the concentration which can be converted as potassium polyphosphate. For example, if a potassium ion source (for example, KOH, CH₃COOK, K₃PO₄, etc.) other than potassium polyphosphate is added and dissolved in water together with potassium polyphosphate during production of the aqueous electrolyte solution 20, the aqueous electrolyte solution 20 will contain more potassium ions than the concentration which can be converted as potassium polyphosphate. The aqueous electrolyte solution 20 may contain other cations as long as the above problems can be solved. For example, alkali metal ions other than potassium ions, alkaline earth metal ions, transition metal ions, and the like may be contained. The aqueous electrolyte solution 20 naturally contains protons.

### 2.2.5 Anion

The aqueous electrolyte solution 20 may contain pyrophosphate ions (it may be present in a state of being linked to actions as mentioned above) and silicate ions (it may be present in a state of being linked to actions as mentioned above) as anions. The aqueous electrolyte solution 20 may contain other anions as long as the above problems can be solved. For example, anions derived from other electrolytes mentioned below may be contained. The aqueous electrolyte solution 20 naturally contains hydroxide ions.

### 2.2.6 Other Components Containable in Aqueous Electrolyte Solution

The aqueous electrolyte solution 20 may contain other electrolytes. For example, the aqueous electrolyte solution may contain at least one selected from KPF₆, KBF₄, K₂SO₄, KNO₃, (CF₃SO₂)₂NK, KCF₃SO₃, (FSO₂)₂NK, K₂HPO₄, KH₂PO₄, KPO₃, and the like. Such other electrolytes may account for 50 mol% or less, 30 mol% or less, or 10 mol% or less of the total amount of electrolytes dissolved in the electrolyte solution (100 mol%). The aqueous electrolyte solution 20 may contain various additives in addition to the above-mentioned electrolytes.

### 2.3 Other Properties

As long as the aqueous electrolyte solution 20 contains the solvents and electrolytes mentioned above, there is no particular limitation on other properties. An example of other properties of the aqueous electrolyte solution 20 will be described below.

### 2.3.1 Freezing Point

The aqueous electrolyte solution 20 may have no freezing point at -40°C or higher. The presence or absence of "freezing point" of the aqueous electrolyte solution 20 is confirmed by differential scanning calorimetry (DSC). Note that the DSC sweep rate is set at 5°C/min for both descending temperature and ascending temperature, and the sweep range is set as follows: temperature descending to -120°C from room temperature, followed by temperature ascending to 40°C. The atmosphere in DSC is an atmosphere of inert gas such as Ar, and the pressure is equal to the atmospheric pressure. However, since a sealed aluminum container is used for the evaluation, the atmosphere inside the container is the sealed atmosphere under atmospheric pressure. If the crystallization peak temperature (freezing point temperature) is not confirmed at -40°C or higher when the aqueous electrolyte solution is measured under the above conditions, the aqueous electrolyte solution is considered to have "no freezing point at -40°C or higher". The aqueous electrolyte solution 20 may have no freezing point at -60°C or higher, no freezing point at -80°C or higher, no freezing point at -100°C or higher, or no freezing point at -120°C or higher. In order to achieve the conditions that "aqueous electrolyte solution 20 has no freezing point at - 40°C or higher" in the aqueous battery 100 of the present disclosure, it is effective to allow the concentration of the potassium polyphosphate, the concentration of the silicic acid salt, and the concentration of other additive components to high concentrations in the aqueous electrolyte solution 20. When the aqueous electrolyte solution 20 has no freezing point at -40°C, the Al elution suppression effect is more easily enhanced. When the aqueous electrolyte solution 20 has no freezing point at -40°C, it is also possible to use the aqueous battery 100 even at extremely low temperature. Namely, the aqueous battery 100 operates properly even in cold district.

### 2.3.2 Presence or Absence of Precipitation of Salt

The aqueous electrolyte solution 20 may not involve salt precipitation when cooled from 0°C to - 40°C. When the aqueous electrolyte solution 20 does not involve salt precipitation due to temperature change, it becomes possible to perform stable ionic conduction even at low temperature. For example, the aqueous battery 100 can be used even at extremely low temperature in cold district. The aqueous electrolyte solution 20 includes water, potassium polyphosphate dissolved in the water, and the like, as mentioned above. According to the inventors' new knowledge, the saturation solubility of potassium polyphosphate or the like in water has low temperature dependence and scarcely changes at low temperature of 0°C or lower. In this respect, even if the aqueous electrolyte solution 20 is cooled from 0°C to -40°C, salt precipitation in the aqueous electrolyte solution 20 hardly occurs.

### 2.3.3 Viscosity

If the viscosity of the aqueous electrolyte solution 20 is too high, the ionic conductivity of the aqueous electrolyte solution 20 may deteriorate. Meanwhile, if potassium pyrophosphate or the like is dissolved at high concentration in the aqueous electrolyte solution 20, the aqueous electrolyte solution 20 may have a certain level or more of the viscosity. From the above point of view, the aqueous electrolyte solution 20 may have a viscosity of 10 mPa·s or more and 400 mPa·s or less at 25°C. The viscosity may be 350 mPa·s or less, 300 mPa·s or less, 250 mPa·s or less, or 200 mPa·s or less.

### 2.3.4 pH

The pH of the aqueous electrolyte solution 20 is not particularly limited. As above-mentioned above, the aqueous electrolyte solution 20 contains the silicic acid salt dissolved therein and therefore the pH thereof easily increases. If the pH of the aqueous electrolyte solution 20 is too high, the potential window on the oxidation side of the aqueous electrolyte solution may be narrow. In this respect, the pH of the aqueous electrolyte solution 20 may be 3 or more and 13 or less. The pH may be 4 or more, 5 or more, 6 or more, or 7 or more, and may be 12 or less, 11 or less, 10 or less, or 9 or less.

### 2.4 Variation

The aqueous electrolyte solution 20 may have the following structure in one embodiment. Namely, an aqueous electrolyte solution 20 according to one embodiment is characterized by including water, pyrophosphate ions, silicate ions, and potassium ions.

### 3. Negative Electrode

It is possible to use, as the negative electrode 30, any known negative electrode for an aqueous battery. As shown in FIG. 1, the negative electrode 30 may include a negative electrode active material layer 31 and a negative electrode current collector 32.

### 3.1 Negative Electrode Active Material Layer

The negative electrode active material layer 31 contains a negative electrode active material. The negative electrode active material layer 31 is impregnated with the aqueous electrolyte solution 20. The negative electrode active material layer 31 may contain, in addition to the negative electrode active material, a conductive aid, a binder, and/or the like. The negative electrode active material layer 31 may also contain various other additives. The content of each component in the negative electrode active material layer 31 may be appropriately determined according to the objective battery performance. For example, the content of the negative electrode active material may be 40% by mass or more, 50% by mass or more, 60% by mass or more, or 70% by mass or more, and may be 100% by mass or less, or 90% by mass or less, based on 100% by mass of the entire negative electrode active material layer 31 (total solid content). The shape of the negative electrode active material layer 31 is not particularly limited, and the negative electrode active material layer may be, for example, a sheet-shaped negative electrode active material layer having an approximately flat surface. The thickness of the negative electrode active material layer 31 is not particularly limited, and may be, for example, 0.1 µm or more, 1 µm or more, or 10 µm or more, and may be 2 mm or less, 1 mm or less, or 500 µm or less.

Any substance capable of functioning as the negative electrode active material of the aqueous battery can be used as the negative electrode active material. The negative electrode active material has a lower charge-discharge potential than that of the above-mentioned positive electrode active material, and can be appropriately selected in consideration of the potential window and the like of the above-mentioned aqueous electrolyte solution 20. In the present embodiment, various ions derived from the aqueous electrolyte solution can serve as charge compensation ions. Specifically, charge compensation ions inserted and deinserted by the negative electrode active material may be, for example, one, or two or more of potassium ions, protons, electrolyte-derived anions, and hydroxide ions. For example, the negative electrode active material may be alkali metal-transition metal composite oxide; titanium oxide; metal sulfides such as Mo₆S₈; elemental sulfur; alkali metal-titanium composite phosphate compounds; NASICON-type compounds; WO₃, and the like. Alternatively, the negative electrode active material may be a hydrogen storage alloy. Alternatively, the negative electrode active material may be an inorganic compound having a crystal structure belonging to a space group I23. The crystal structure belonging to a space group I23 may contain, for example, an element A, an element M, and O. The element A is at least one of Bi and La, the element M may be at least one of Bi, Mn, Fe, Co and Ni, or both the element A and the element M may be Bi. The negative electrode active material may be one which inserts and deinserts charge compensation ions by intercalation, or which inserts and deinserts charge compensation ions by a conversion reaction or an alloying reaction. Only one negative electrode active material may be used alone, or two or more thereof may be used in combination.

The shape of the negative electrode active material may be any shape capable of functioning as the negative electrode active material of the battery. For example, the negative electrode active material may be in the form of particles. The negative electrode active material may be a solid material, a hollow material, a material with voids, or a porous material. The negative electrode active material may be a primary particle, or a secondary particle obtained by agglomeration of a plurality of primary particles. The mean particle diameter D50 of the negative electrode active material may be, for example, 1 nm or more, 5 nm or more, or 10 nm or more, and may be 500 µm or less, 100 µm or less, 50 µm or less, or 30 µm or less.

Examples of the conductive aid which can be contained in the negative electrode active material layer 31 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the negative electrode active material layer 31 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 3.2 Negative Electrode Current Collector

As shown in FIG. 1, the negative electrode 30 may include a negative electrode current collector 32 in contact with the negative electrode active material layer 31. The negative electrode current collector 32 is in contact with an aqueous electrolyte solution 20. It is possible to use, as the negative electrode current collector 32, any material capable of functioning as the negative electrode current collector of the aqueous battery. When the above-mentioned positive electrode current collector 12 contains Al, the negative electrode current collector 32 may contain Al or may not contain Al. When the above-mentioned positive electrode current collector 12 does not contain Al, the negative electrode current collector 32 contains Al.

When the negative electrode current collector 32 contains Al, the entire negative electrode current collector 32 may be composed of Al, or at least a portion of the surface thereof may be composed of Al. For example, the negative electrode current collector 32 may be made of an Al foil, or the surface of a metal foil or some base material may be coated with Al. The negative electrode current collector 32 may be one in which Al is present on at least a portion of the surface in contact with the aqueous electrolyte solution 20, or one in which Al is present over the entire surface in contact with the aqueous electrolyte solution 20.

The negative electrode current collector 32 may be in the form of foil, plate, mesh, perforated metal and foam. The negative electrode current collector 32 may be formed of a metal foil or a metal mesh. In particular, the metal foil is excellent in ease of handling or the like. The negative electrode current collector 32 may be composed of a plurality of foils. Examples of the metal material constituting the negative electrode current collector 32 include those containing at least one element selected from the group consisting of Cu, Ni, Al, V, Au, Pt, Mg, Fe, Ti, Pb, Co, Cr, Zn, Ge, In, Sn, and Zr. In particular, the negative electrode current collector 32 preferably contains at least one element selected from the group consisting of Al, Ti, Pb, Zn, Sn, Mg, Zr and In, and preferably contains Al, as mentioned above. All of Al, Ti, Pb, Zn, Sn, Mg, Zr and In have low work functions, and even if the negative electrode current collector 32 comes into contact with the aqueous electrolyte solution 20, it is considered to be difficult for the aqueous electrolyte solution 20 to undergo electrolysis. The negative electrode current collector 32 may be one in which the above metal is plated or vapor-deposited on a metal foil or a base material. When the negative electrode current collector 32 is composed of a plurality of metal foils, the negative electrode current collector may have some layers between the plurality of metal foils. The thickness of the negative electrode current collector 32 is not particularly limited. For example, the thickness may be 0.1 µm or more, or 1 µm or more, and may be 1 mm or less, or 100 µm or less.

### 4. Other Structures

In the aqueous battery 100, various ions derived from the aqueous electrolyte solution 20 can function as carrier ions and charge compensation ions. The aqueous battery 100 may be an aqueous battery (aqueous proton battery) in which protons function as carrier ions and charge compensation ions, an aqueous battery (aqueous potassium ion battery) in which potassium ions function as carrier ions and charge compensation ions, an aqueous battery (aqueous hydroxide ion battery) in which hydroxide ions function as carrier ions and charge compensation ions, an aqueous battery (aqueous pyrophosphate anion battery) in which pyrophosphate anions function as carrier ions and charge compensation ions, or an aqueous battery in which other ions derived from the aqueous electrolyte solution 20 function as carrier ions and charge compensation ions. In the aqueous battery 100, a plurality of ions derived from the aqueous electrolyte solution 20 may function as carrier ions and charge compensation ions. The aqueous battery 100 may have, in addition to the above-mentioned basic structure, the following other structures.

### 4.1 Separator

As mentioned above, a separator 40 may be present between the positive electrode 10 and the negative electrode 30 in the aqueous battery 100. The separator 40, which may be used, is a separator used in a conventional aqueous electrolyte solution battery (nickel-metal hydride battery, zinc air battery, etc.). For example, the separator is a separator having the hydrophilicity, such as non-woven fabrics made of a cellulose material. The thickness of the separator 40 is not particularly limited, and may be, for example, 5 µm or more and 1 mm or less.

### 4.2 Bipolar Structure

As mentioned above, in the aqueous battery 100, both the positive electrode current collector 12 and the negative electrode current collector 32 may contain Al. In this regard, in the aqueous battery 100, a current collector containing Al may be used as a bipolar current collector which serves as both the positive electrode current collector 12 and the negative electrode current collector 32. Namely, the positive electrode 10 and the negative electrode 30 may share one current collector. FIG. 2 shows an example of a bipolar structure. As shown in FIG. 2, the aqueous battery 100 may have a bipolar structure, and a positive electrode active material layer 11 may be formed on one side of an Al-containing current collector 50 (bipolar current collector which functions as both the positive electrode current collector 12 and the negative electrode current collector 32) and a negative electrode active material layer 31 may be formed on the other side of the current collector 50. In this case, the Al-containing current collector 50 may not have liquid permeability, that is, the aqueous electrolyte solution 20 may not permeate from the positive electrode active material layer 11 to the negative electrode active material layer 31 via the current collector 50 and vice versa.

### 4.3 Terminal or the like

The aqueous battery 100 may include, in addition to the above structure, a terminal, a battery case and the like. Other structures are obvious to those skilled in the art who refer to the present application, and therefore explanation will be omitted here.

### 5. Method for Producing Aqueous Battery

The aqueous battery 100 of the present disclosure can be produced, for example, as follows.

### 5.1 Method for Producing Aqueous Electrolyte Solution

The aqueous electrolyte solution 20 can be produced, for example, by mixing water, potassium polyphosphate, and a silicic acid salt. Alternatively, the aqueous electrolyte solution can also be produced by mixing water, a potassium ion source, a pyrophosphate ion source, and a silicate ion source. The mixing method is not particularly limited, and any known mixing method can be used. By simply filling a container with water, potassium polyphosphate and a silicic acid salt, followed by standing, they are mixed with one another to finally obtain an aqueous electrolyte solution 20.

### 5.2 Production of Positive Electrode

The positive electrode 10 is produced, for example, as follows. A positive electrode active material and etc. constituting the positive electrode active material layer 11 are dispersed in a solvent to obtain a positive electrode mixture paste (slurry). The solvent used in this case is not particularly limited, and water and various organic solvents can be used. Using a doctor blade or the like, the positive electrode mixture paste (slurry) is applied on the surface of the positive electrode current collector 12, and then dried to form a positive electrode active material layer 11 on the surface of the positive electrode current collector 12, thus obtaining a positive electrode 10. It is possible to use, as the coating method, an electrostatic coating method, a dip coating method, a spray coating method and the like, including a doctor blade method.

5.3 Production of Negative Electrode

The negative electrode 30 is produced, for example, as follows. A negative electrode active material and etc. constituting the negative electrode active material layer 31 are dispersed in a solvent to obtain a negative electrode mixture paste (slurry). The solvent used in this case is not particularly limited, and water and various organic solvents can be used. Using a doctor blade or the like, the negative electrode mixture paste (slurry) is applied on the surface of the negative electrode current collector 32, and then dried to form a negative electrode active material layer 31 on the surface of the negative electrode current collector 32, thus obtaining a negative electrode 30. It is possible to use, as the coating method, an electrostatic coating method, a dip coating method, a spray coating method and the like, including a doctor blade method.

### 5.4 Housing or the like in Battery Case

The aqueous electrolyte solution 20, the positive electrode 10 and the negative electrode 30 are housed in a battery case to obtain an aqueous battery 100. For example, the separator 40 is sandwiched between the positive electrode 10 and the negative electrode 30 to obtain a laminate including the positive electrode current collector 12, the positive electrode active material layer 11, the separator 40, the negative electrode active material layer 31 and the negative electrode current collector 32 in this order. Other members such as terminal are attached to the laminate as necessary. The laminate is housed in a battery case and the battery case is filled with the aqueous electrolyte solution 20, and the laminate and the electrolyte solution are sealed in the battery case so that the laminate is immersed in the aqueous electrolyte solution 20 to obtain an aqueous battery 100.

### 6. Effect by Aqueous Battery of Present Disclosure

According to the aqueous battery 100 of the present disclosure, it is possible to suppress elution of Al from the current collector into the aqueous electrolyte solution 20 by the following function and effect.

6.1 Function and Effect when Al is contained in Positive Electrode Current Collector During charging and discharging of the battery, the potential of the positive electrode becomes the potential on the oxidation side. Therefore, Al contained in the positive electrode current collector emits electrons, leading to an easily dissolvable state. Specifically, Al contained in the positive electrode current collector dissolves into the aqueous electrolyte solution while coordinating with anions and water molecules contained in the aqueous electrolyte solution. Here, potassium polyphosphate is dissolved in the aqueous electrolyte solution 20 in the aqueous battery 100 of the present disclosure. In other words, anions derived from potassium polyphosphate, such as pyrophosphate ions, may be present in the aqueous electrolyte solution 20. Therefore, in the aqueous battery 100 of the present disclosure, Al contained in the positive electrode current collector 12 is easily coordinated with anions derived from potassium polyphosphate. Here, for example, aluminum pyrophosphate has extremely low solubility in the aqueous electrolyte solution 20. Therefore, Al coordinated with anions derived from potassium polyphosphate is quickly precipitated as a solid. In other words, an insoluble or poor soluble Al compound is precipitated near the surface of the positive electrode current collector 12, and the Al compound adheres to the surface of the positive electrode current collector 12 to form a protective film (passive film) on the surface. As a result, in the aqueous battery 100 of the present disclosure, it is possible to suppress elution of Al from the positive electrode current collector 12 to the aqueous electrolyte solution 20 by the protective film.

A silicic acid salt is dissolved in the aqueous electrolyte solution 20 in the aqueous battery 100 of the present disclosure. According to the inventors' new findings, when a silicic acid salt is dissolved together with potassium polyphosphate in the aqueous electrolyte solution 20, Al on which the silicic acid salt acts is also extremely low in solubility to enable the above-mentioned protective film (passive film) to be stabilized, and furthermore, even if the above-mentioned protective film (passive film) is peeled to expose an Al surface of the current collector, pyrophosphate ions and the silicic acid salt again act on Al, and thus not only the protective film (passive film) can be formed, but also the effect of Al elution suppression can be significantly improved.

At least one of orthophosphoric acid, metaphosphoric acid (pyrophosphoric acid) and carboxylic acid may be dissolved in the aqueous electrolyte solution 20 in the aqueous battery 100 of the present disclosure. When orthophosphoric acid, metaphosphoric acid, and/or carboxylic acid are/is dissolved together with potassium polyphosphate in the aqueous electrolyte solution 20, not only the above-mentioned passivation effect by potassium polyphosphate is obtained, but also the pH of the aqueous electrolyte solution 20 can be lowered. It is also considered that the effect by mixing pyrophosphate anions and other anions in the aqueous electrolyte solution and the effect due to an increase in anion concentration are exerted. Namely, it is considered that, while performance of the aqueous electrolyte solution 20 is maintained, a passive film of Al formed on the surface of the current collector is more stabilized.

6.2 Function and Effect when Al is contained in Negative Electrode Current Collector During charging and discharging of the battery, the potential of the negative electrode becomes the potential on the reduction side. Therefore, electrolysis of the aqueous electrolyte solution in contact with the negative electrode causes generation of hydroxide ions, and the pH of the aqueous electrolyte solution in the vicinity of the negative electrode tends to increase. When the pH of the aqueous electrolyte solution in the vicinity of the negative electrode increases, the solubility of Al in the aqueous electrolyte solution increases, and the Al contained in the negative electrode current collector is easily eluted into the aqueous electrolyte solution. In contrast, potassium polyphosphate is dissolved in the aqueous electrolyte solution 20 in the aqueous battery 100 of the present disclosure, as mentioned above. Therefore, in the aqueous battery 100 of the present disclosure, even if Al contained in the negative electrode current collector 32 is eluted into the aqueous electrolyte solution 20, Al is quickly coordinated with anions derived from potassium polyphosphate, and formed into an Al compound and deposited as a solid. In other words, an insoluble or poor soluble Al compound is precipitated near the surface of the negative electrode current collector 32, and the Al compound adheres to the surface of the negative electrode current collector 32 to form a protective film (passive film) on the surface. As a result, in the aqueous battery 100 of the present disclosure, it is possible to suppress elution of Al from the negative electrode current collector 32 to the aqueous electrolyte solution 20 by the protective film.

In the aqueous battery 100 of the present disclosure, as mentioned above, a silicic acid salt is dissolved in the aqueous electrolyte solution 20, the above-mentioned protective film (passive film) can be stabilized, and furthermore, even if the above-mentioned protective film (passive film) is peeled to expose an Al surface of the current collector, the protective film (passive film) can also be formed with the silicic acid salt and the effect of Al elution suppression can be significantly improved.

At least one of orthophosphoric acid, metaphosphoric acid (pyrophosphoric acid) and carboxylic acid may be dissolved in the aqueous electrolyte solution 20 in the aqueous battery 100 of the present disclosure, as mentioned above. When orthophosphoric acid, metaphosphoric acid, and/or carboxylic acid are/is dissolved together with potassium polyphosphate in the aqueous electrolyte solution 20, not only the above-mentioned passivation effect by potassium polyphosphate is obtained, but also the pH of the aqueous electrolyte solution 20 can be lowered. It is also considered that the effect by mixing pyrophosphate anions and other anions in the aqueous electrolyte solution and the effect due to an increase in anion concentration are exerted. Namely, it is considered that, while performance of the aqueous electrolyte solution 20 is maintained, a passive film of Al formed on the surface of the current collector is more stabilized.

### 6.3 Other Effects

In aqueous electrolyte solution batteries, those containing Ti and Ni are used as current collectors to prevent corrosion of such current collectors (for example, PTL 1). It has been considered difficult to adopt metals other than these because they elute at, for example, positive electrode potential. However, since Ti and Ni are expensive, an alternative technology using less expensive metals is needed for the widespread use of aqueous electrolyte solution batteries. In this respect, in the aqueous battery 100 of the present disclosure, those containing Al are used as current collectors to reduce the overall cost of the battery, while the above-mentioned aqueous electrolyte solution 20 is employed to allow for suppression of elution of Al from the current collector to the aqueous electrolyte solution.

### 7. Use of Aqueous Battery

As mentioned above, according to the aqueous battery of the present disclosure, it is possible to suppress elution of Al from the current collector to the aqueous electrolyte solution. Namely, deterioration of the battery is easily suppressed. Such an aqueous battery can be suitably used, for example, in at least one vehicle selected from a hybrid electric vehicle (HEV), a plug in hybrid electric vehicle (PHEV), and a battery electric vehicle (BEV). Namely, the technology of the present disclosure also has an aspect as a vehicle having an aqueous battery, the aqueous battery including a positive electrode, an aqueous electrolyte solution and a negative electrode, wherein one or both of the positive electrode and the negative electrode has/have a current collector containing Al, and the aqueous electrolyte solution contains water, potassium polyphosphate dissolved in the water, and a silicic acid salt dissolved in the water. The details of the aqueous electrolyte solution and the details of the battery structure are as mentioned above.

### EXAMPLES

Hereinafter, the technology of the present disclosure will be described in more detail by way of Examples, but the technology of the present disclosure is not limited to the following Examples.

### 1. Fabrication and Evaluation of Aqueous Electrolyte Solution

### 1.1 Fabrication of Aqueous Electrolyte Solution

### 1.1.1 Comparative Examples 1 to 6

Only potassium pyrophosphate (K₄P₂O₇) was dissolved at a predetermined concentration in pure water to obtain an aqueous electrolyte solution according to each of Comparative Examples 1 to 6.

### 1.1.2 Examples 1 to 66

A solution (manufactured by FUJIFILM Wako Pure Chemical Corporation) containing 50% by mass of potassium metasilicate (K₂SiO₃) was prepared. The solution was arbitrarily diluted with pure water to obtain a solution containing potassium metasilicate at a predetermined concentration (% by mass). Potassium pyrophosphate (K₄P₂O₇), and pyrophosphoric acid (K₄P₂O₇) or acetic acid (CH₃COOH) as an optional component were dissolved therein at predetermined concentrations to obtain an aqueous electrolyte solution according to each of Examples 1 to 66.

### 1.2 Method for Evaluating Aqueous Electrolyte Solution

1.2.1 Confirmation of Concentration of K, Concentration of P and Concentration of Si The concentration of K, the concentration of P and the concentration of Si in the aqueous electrolyte solution were measured with ICP. The results are shown in Tables 1 to 3 below.

### 1.2.2 Ion Conductivity

The ion conductivity at room temperature (25°C) of the aqueous electrolyte solution was measured with an ion conductivity meter (Sevenmulti, manufactured by Mettler-Toledo). The results are shown in Tables 1 to 3 below.

### 1.2.3 Viscosity

The viscosity at room temperature (25°C) of the aqueous electrolyte solution was measured with a viscometer (VM10, manufactured by SEKONIC CORPORATION). The results are shown in Tables 1 to 3 below.

### 1.2.4 pH

The pH at room temperature (25°C) of the aqueous electrolyte solution was measured with a pH meter (Sevenmulti, manufactured by Mettler-Toledo). The results are shown in Tables 1 to 3 below.

### 1.2.5 Low-Temperature Stability Evaluation

After the aqueous electrolyte solution was retained in a constant-temperature bath at -60°C for 8 hours or more, the state of the aqueous electrolyte solution was visually observed to confirm the presence or absence of freezing (the presence or absence of whitening). In the case of no freezing of the aqueous electrolyte solution, it can be said that the aqueous electrolyte solution has no freezing point at -60°C or higher. The results are shown in Tables 1 to 3 below.

### 1.2.6 Electrochemical Measurement

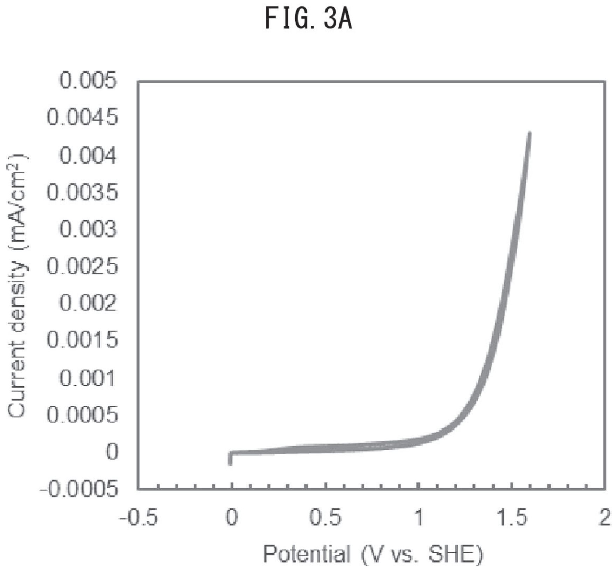

An Al foil was used for a working electrode, a Ni foil was used for a counter electrode, Ag/AgCl was used for a reference electrode, and the above aqueous electrolyte solution was used for an electrolyte solution to fabricate an electrochemical cell (SB1A, manufactured by EC FRONTIER CO., LTD.). The electrochemical cell was subjected to cyclic voltammetry under conditions of 2 cycles at 1.4 V vs. SHE and 2 cycles at 1.6 V, with sweep toward the oxidation side from an open-circuit potential (OCP) at a sweep rate of 1 mV/sec, in a constant-temperature bath at 25°C. After the above electrochemical measurement, the degree of elution of the Al foil into the aqueous electrolyte solution was evaluated on a four-point scale of the following A to D, from the cyclic voltammogram at the second cycle. The results are shown in Tables 1 to 3 below. A: As shown in FIG. 3A, no oxidation current flows even in an increase in potential from OCP to 1.0 V, and no oxidation current flows even by reversing the sweep (namely, passivation of the Al foil surface and no occurrence of elution of the Al foil).

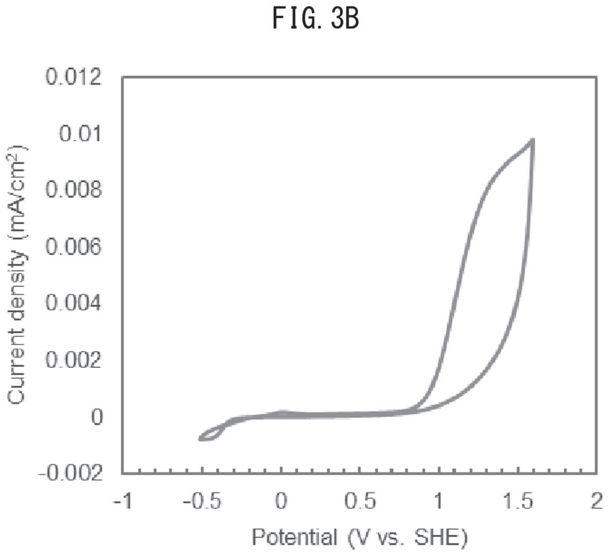

B: As shown in FIG. 3B, no oxidation current flows even in an increase in potential from OCP to 1.0 V, and an oxidation current is suppressed even by reversing the sweep, but the suppression range is 0.5 V or more and less than 1.0 V.

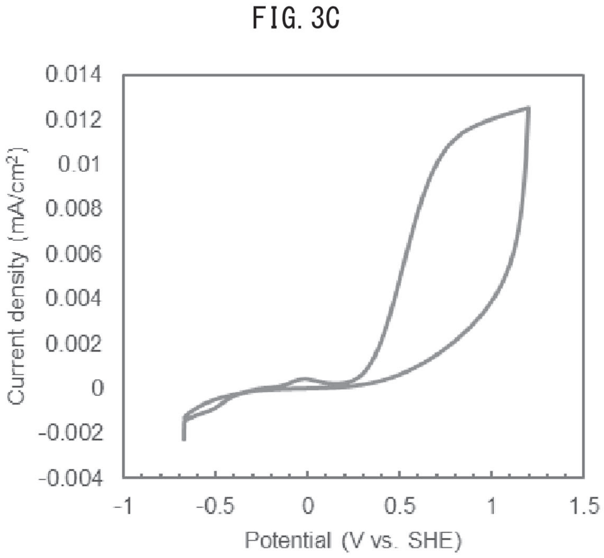

C: As shown in FIG. 3C, no oxidation current flows even in an increase in potential from OCP to 1.0 V, and an oxidation current is suppressed even by reversing the sweep, but the suppression range is 0.5 V or less.

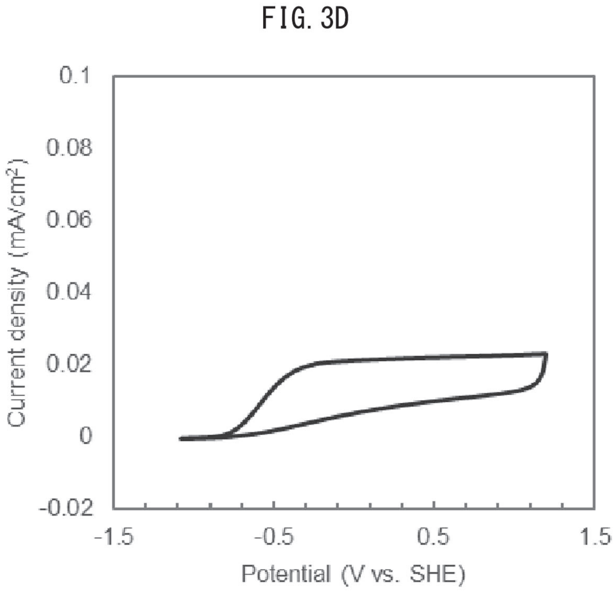

D: As shown in FIG. 3D, an oxidation current flows by the sweep toward the oxidation side from OCP, and the oxidation current continuously flows even by reversing the sweep.

### 1.3 Evaluation Results of Aqueous Electrolyte Solution

**TABLE 1**

| | K₃SiO₃ (% by mass) | K₄P₂O₇ (mol/kg) | H₄P₂O₇ (mol/kg) | CH₃COOH (mol/kg) | Concentration of K (ppm) | Concentration of P (ppm) | Concentration of Si (ppm) | Ion conductivity (mS/cm) | Viscosity (mPa·S) | PH | Presence or absence of freezing | Elution of Al |
|---|---|---|---|---|---|---|---|---|---|---|---|---|
| Comparative Example 1 | 0% | 1 | 0 | 0 | 146500 | Not evaluated | 0 | 159.5 | 2.0 | 10.6 | Presence | D |
| Comparative Example 2 | 0% | 2 | 0 | 0 | 268450 | Not evaluated | 0 | 182.5 | 4.1 | 11.2 | Presence | D |
| Comparative Example 3 | 0% | 3 | 0 | 0 | 371150 | Not evaluated | 0 | 139.2 | 9.3 | 11.7 | Presence | D |
| Comparative Example 4 | 0% | 4 | 0 | 0 | 454250 | Not evaluated | 0 | 85.2 | 21.3 | 11.9 | Absence | D |
| Comparative Example 5 | 0% | 5 | 0 | 0 | 526050 | Not evaluated | 0 | 45.5 | 52.1 | 12.2 | Absence | D |
| Comparative Example 6 | 0% | 6 | 0 | 0 | 562250 | Not evaluated | 0 | 24.9 | 115.0 | 12.2 | Absence | D |
| Example 1 | 50% | 1 | 0 | 0 | 341700 | 40450 | 186550 | 37.8 | 153.9 | 13.9 | Absence | A |
| Example 2 | 40% | 1 | 0.1 | 0 | 274800 | 46550 | 115200 | 84.8 | 29.5 | 13.1 | Presence | A |
| Example 3 | 50% | 2 | 0 | 0 | 402950 | 72900 | 150950 | 19.2 | 391.8 | 14.1 | Absence | A |
| Example 4 | 30% | 2 | 0.01 | 0 | Not evaluated | Not evaluated | Not evaluated | 88.2 | 20.9 | 13.4 | Presence | A |
| Example 5 | 30% | 2 | 0.1 | 0 | 353150 | 99100 | 83450 | 87.9 | 24.6 | 12.7 | Presence | A |
| Example 6 | 25% | 3 | 0 | 0 | 437800 | 135300 | 64950 | 64.9 | 34.7 | 13.7 | Absence | A |
| Example 7 | 10% | 3 | 0.2 | 0 | 371850 | 144050 | 13500 | 117.2 | 12.9 | 11.1 | Presence | A |
| Example 8 | 10% | 3 | 1 | 0 | 368000 | 177050 | 2600 | 102.4 | 18.9 | 7.9 | Presence | A |
| Example 9 | 20% | 3 | 0.0001 | 0 | Not evaluated | Not evaluated | Not evaluated | 79.6 | 24.5 | 13.4 | Presence | A |
| Example 10 | 20% | 3 | 0.001 | 0 | Not evaluated | Not evaluated | Not evaluated | 77.6 | 25.6 | 13.4 | Presence | A |
| Example 11 | 20% | 3 | 0.01 | 0 | Not evaluated | Not evaluated | Not evaluated | 80.4 | 25.7 | 13.2 | Presence | A |
| Example 12 | 20% | 3 | 0.1 | 0 | 369200 | 128100 | 42450 | 77.6 | 28.0 | 12.6 | Presence | A |
| Example 13 | 20% | 3 | 0.1 | 0 | 407850 | 136150 | 46750 | 82.1 | 26.5 | 12.7 | Presence | A |
| Example 14 | 20% | 3 | 0.2 | 0 | 403900 | 136900 | 43750 | 94.0 | 19.4 | 12.2 | Presence | A |
| Example 15 | 20% | 3 | 0.3 | 0 | 384300 | 137050 | 38700 | 100.6 | 16.5 | 11.7 | Presence | A |
| Example 16 | 2% | 4 | 0.5 | 0 | 446100 | 194750 | 3100 | 71.5 | 29.8 | 9.1 | Absence | C |
| Example 17 | 5% | 4 | 0.2 | 0 | 454950 | 185650 | 7000 | 70.7 | 31.4 | 10.6 | Absence | C |
| Example 18 | 5% | 4 | 0.5 | 0 | 449150 | 192100 | 6950 | 65.2 | 42.6 | 9.0 | Absence | C |

**TABLE 2**

| | K₃SiO₃ (% by mass) | K₄P₂O₇ (mol/kg) | H₄P₂O₇ (mol/kg) | CH₃COOH (mol/kg) | Concentration of K (ppm) | Concentration of P (ppm) | Concentration of Si (ppm) | Ion conductivity (mS/cm) | Viscosity (mPa·S) | PH | Presence or absence of freezing | Elution of Al |
|---|---|---|---|---|---|---|---|---|---|---|---|---|
| Example 19 | 5% | 4 | 1 | 0 | 426250 | 202150 | 4100 | 69.6 | 34.3 | 8.3 | Absence | C |
| Example 20 | 10% | 4 | 0 | 0 | 469750 | 171200 | 21500 | 61.3 | 34.1 | 13.4 | Absence | A |
| Example 21 | 10% | 4 | 0.0001 | 0 | Not evaluated | Not evaluated | Not evaluated | 61.7 | 34.6 | 13.1 | Absence | A |
| Example 22 | 10% | 4 | 0.0011 | 0 | 539550 | 204100 | 23200 | 58.8 | 36.2 | 13.1 | Absence | A |
| Example 23 | 10% | 4 | 0.01 | 0 | 449800 | 169600 | 19350 | 61.3 | 37.1 | 13.0 | Absence | A |
| Example 24 | 10% | 4 | 0.1 | 0 | 532800 | 210050 | 8300 | 65.6 | 31.7 | 11.9 | Presence | A |
| Example 25 | 10% | 4 | 0.1 | 0 | 472050 | 179500 | 7600 | 68.4 | 30.9 | 12.1 | Presence | A |
| Example 26 | 10% | 4 | 0.2 | 0 | 423550 | 165650 | 9550 | 61.7 | 34.7 | 10.8 | Presence | A |
| Example 27 | 10% | 4 | 0.3 | 0 | 379100 | 152150 | 4600 | 59.6 | 38.7 | 10.4 | Presence | C |
| Example 28 | 10% | 4 | 0.5 | 0 | 465150 | 193500 | 6900 | 63.4 | 34.7 | 10.4 | Presence | C |
| Example 29 | 10% | 4 | 1 | 0 | 448650 | 198950 | 4450 | 63.6 | 38.5 | 9.0 | Presence | C |
| Example 30 | 1% | 5 | 0.05 | 0 | 501150 | 207650 | 1800 | 42.4 | 55.0 | 10.9 | Absence | C |
| Example 31 | 1% | 5 | 0.1 | 0 | 507200 | 212850 | 1800 | 41.7 | 55.1 | 10.8 | Absence | C |
| Example 32 | 1% | 5 | 0.1 | 0 | 512050 | 213400 | 900 | 42.8 | 54.1 | 10.5 | Absence | B |
| Example 33 | 1% | 5 | 0.2 | 0 | 504750 | 216000 | 950 | 42.8 | 53.9 | 10.3 | Absence | B |
| Example 34 | 1% | 5 | 0.2 | 0 | 509650 | 216450 | 1800 | 41.8 | 57.4 | 10.3 | Absence | B |
| Example 35 | 1% | 5 | 0.5 | 0 | 505200 | 218400 | 1400 | 39.4 | 67.9 | 9.4 | Absence | B |
| Example 36 | 2% | 5 | 0.05 | 0 | 506500 | 207300 | 3550 | 40.7 | 57.8 | 11.3 | Absence | A |
| Example 37 | 2% | 5 | 0.1 | 0 | 509400 | 210400 | 3600 | 40.9 | 57.3 | 10.6 | Absence | C |
| Example 38 | 2% | 5 | 0.2 | 0 | 511500 | 209600 | 2800 | 38.3 | 67.2 | 10.5 | Absence | B |
| Example 39 | 2% | 5 | 0.5 | 0 | 509650 | 216000 | 3100 | 37.6 | 74.0 | 9.5 | Absence | B |
| Example 40 | 2% | 5 | 1 | 0 | 492900 | 231150 | 2950 | 39.2 | Not evaluated | 8.7 | Presence | B |
| Example 41 | 3% | 5 | 0.05 | 0 | 504400 | 206500 | 5100 | 40.5 | 60.0 | 11.5 | Absence | A |
| Example 42 | 3% | 5 | 0.1 | 0 | 518150 | 213300 | 5300 | 39.6 | 60.0 | 11.0 | Absence | A |

**TABLE 3**

| | K₃SiO₃ (% by mass) | K₄P₂O₇ (mol/kg) | H₄P₂O₇ (mol/kg) | CH3COOH (mol/kg) | Concentration of K (ppm) | Concentration of P (ppm) | Concentration of Si (ppm) | Ion conductivity (mS/cm) | Viscosity (mPa·S) | PH | Presence or absence of freezing | Elution of Al |
|---|---|---|---|---|---|---|---|---|---|---|---|---|
| Example 43 | 4% | 5 | 0.1 | 0 | 512850 | 210500 | 7050 | 38.5 | 63.9 | 11.2 | Absence | A |
| Example 44 | 5% | 5 | 0 | 0 | 522900 | 199850 | 8450 | 38.5 | 66.3 | 13.1 | Absence | A |
| Example 45 | 5% | 5 | 0.0001 | 0 | 418300 | 163000 | 6950 | 35.1 | 73.7 | 12.8 | Absence | A |
| Example 46 | 5% | 5 | 0.001 | 0 | 514450 | 203050 | 8300 | 35.2 | 71.4 | 12.8 | Absence | A |
| Example 47 | 5% | 5 | 0.01 | 0 | 498900 | 195800 | 8150 | 35.2 | 72.4 | 12.6 | Absence | A |
| Example 48 | 5% | 5 | 0.1 | 0 | 509500 | 202600 | 7400 | 34.5 | 73.6 | 11.5 | Absence | A |
| Example 49 | 5% | 5 | 0.1 | 0 | 529100 | 204900 | 7850 | 37.1 | 72.5 | 11.5 | Absence | A |
| Example 50 | 5% | 5 | 0.2 | 0 | 497850 | 202250 | 3550 | 35.1 | 79.2 | 10.5 | Absence | B |
| Example 51 | 5% | 5 | 0.3 | 0 | 376150 | 166600 | 3300 | 31.6 | 94.3 | 10.5 | Absence | B |
| Example 52 | 5% | 5 | 0.5 | 0 | 527500 | 225350 | 8450 | 35.4 | 81.0 | 9.9 | Presence | C |
| Example 53 | 5% | 5 | 1 | 0 | 488200 | 219400 | 7500 | 51.1 | 53.6 | 8.8 | Presence | C |
| Example 54 | 2% | 4 | 0 | 1 | 426300 | 172250 | 3700 | 72.4 | 25.1 | 9.6 | Absence | B |
| Example 55 | 5% | 4 | 0 | 0.5 | 419250 | 164350 | 6250 | 68.0 | 46.0 | 10.8 | Absence | A |
| Example 56 | 5% | 4 | 0 | 1 | 419250 | 165250 | 6450 | 67.6 | 31.1 | 9.9 | Absence | B |
| Example 57 | 5% | 4 | 0 | 2 | 416450 | 161300 | 3700 | 65.7 | 53.4 | 9.3 | Presence | B |
| Example 58 | 2% | 5 | 0 | 1 | 498950 | 201350 | 3450 | 40.2 | 58.1 | 9.9 | Presence | B |
| Example 59 | 2% | 5 | 0 | 2 | 456250 | 171600 | 3700 | 52.5 | 37.9 | 9.9 | Presence | B |
| Example 60 | 5% | 5 | 0 | 0.5 | 491800 | 195450 | 8000 | 36.1 | 68.1 | 11.0 | Absence | A |
| Example 61 | 5% | 5 | 0 | 1 | 497800 | 197050 | 8700 | 35.8 | 67.4 | 10.3 | Presence | B |
| Example 62 | 5% | 5 | 0 | 2 | 478650 | 187750 | 8250 | 36.3 | 66.7 | 9.7 | Presence | B |
| Example 63 | 5% | 5 | 0 | 3 | 398450 | 139300 | 4250 | 64.9 | 24.7 | 10.0 | Presence | B |
| Example 64 | 10% | 5 | 0 | 1 | 485350 | 191400 | 10600 | 33.9 | 72.1 | 11.0 | Presence | A |
| Example 65 | 10% | 5 | 0 | 2 | 471000 | 182600 | 9250 | 35.2 | 66.8 | 10.1 | Presence | B |
| Example 66 | 10% | 5 | 0 | 3 | 436400 | 152500 | 5650 | 54.2 | 32.5 | 10.0 | Presence | B |

As clear from the results shown in Table 1, the elution suppression effect of the Al foil was small in each of Comparative Examples 1 to 6 in which only potassium pyrophosphate was dissolved in the aqueous electrolyte solution. For example, in the cyclic voltammogram in Comparative Example 5, a behavior was exhibited in which a current according to elution of the Al foil flowed with a slight increase in potential from OCP and the current converged therefrom (passivation), and a small amount of current flowed even after repeating of the sweep and a clear change in CV curve shape was not observed even through 2 cycles. The reason for this is considered because the state of the passive film formed on the surface of the Al foil is reset by returning the potential to OCP, and a rigid passive film can be present only in application of the potential, to suppress elution of Al. Thus, it can be said that there is room for improvement in stability of the current collector containing Al in each of Comparative Examples.

In contrast, as clear from the results shown in Tables 1 to 3, the elution suppression effect of the Al foil was remarkably enhanced in each of Examples 1 to 66 in which potassium metasilicate was dissolved together with potassium pyrophosphate in the aqueous electrolyte solution. The reason for this is considered because the passive film with potassium pyrophosphate is stabilized by potassium metasilicate. As clear from the results shown in Tables 1 to 3, when pyrophosphoric acid or acetic acid is dissolved together with potassium pyrophosphate and potassium metasilicate in the aqueous electrolyte solution, not only the elution suppression effect of the Al foil is ensured at a level which is the same as or more than that where such an acid is not dissolved, but also the pH of the aqueous electrolyte solution can be lowered.

As shown in Tables 1 to 3, all the aqueous electrolyte solutions of Examples 1 to 66 each had a high ion conductivity of more than 10 mS/cm. All the aqueous electrolyte solutions of Examples 1 to 66 each had a viscosity of 10 mPa·s or more and 400 mPa·s or less at 25°C. All the aqueous electrolyte solutions of Examples 1 to 66, when cooled from 0°C to -40°C, each did not involve salt precipitation.

The above Examples have illustrated a case where potassium pyrophosphate was dissolved as the potassium polyphosphate in the aqueous electrolyte solution. However, the potassium polyphosphate dissolved in the aqueous electrolyte solution is not limited to potassium pyrophosphate. The present inventor has confirmed that even when potassium polyphosphate (for example, potassium tripolyphosphate) other than potassium pyrophosphate is dissolved instead of potassium pyrophosphate or together with potassium pyrophosphate in the aqueous electrolyte solution, the passivation effect of the Al foil surface is obtained and the same effect as described above is exerted.

The above Examples have illustrated a case where potassium metasilicate was dissolved as the silicic acid salt in the aqueous electrolyte solution. However, the silicic acid salt dissolved in the aqueous electrolyte solution is not limited to potassium metasilicate. The present inventor has confirmed that even when a silicic acid salt (for example, potassium orthosilicate) other than potassium metasilicate is dissolved instead of or together with potassium metasilicate in the aqueous electrolyte solution, the elution suppression effect of the Al foil is enhanced. Herein, when potassium metasilicate is dissolved as the silicic acid salt, the elution suppression effect of the Al foil is more easily enhanced.

The above Examples have illustrated a case where pyrophosphoric acid or acetic acid was dissolved as the component for adjusting the pH of the aqueous electrolyte solution. However, the acid dissolved in the aqueous electrolyte solution is not limited thereto. It has been confirmed that even when, for example, metaphosphoric acid (pyrophosphoric acid) other than pyrophosphoric acid, carboxylic acid other than acetic acid, and/or orthophosphoric acid are/is dissolved instead of or together with pyrophosphoric acid or acetic acid, not only the elution suppression effect of the Al foil is ensured, but also the pH of the aqueous electrolyte solution can be lowered.

### 2. Fabrication and Evaluation of Aqueous Battery

### 2.1 Fabrication of Cell

An evaluation cell was fabricated with the above aqueous electrolyte solution, nickel hydroxide as the positive electrode active material, and La₂Ni₇ being a hydrogen storage alloy as the negative electrode active material. Each electrode was made by fabricating a slurry at a mass ratio of active material: acetylene black: SBR: CMC = 74.5:20:4.5:1, and blade-coating each metal foil (positive electrode current collector: Al foil, negative electrode current collector: titanium foil). The electrode after coating was dried under reduced pressure at 60°C overnight, then roll-pressed at a linear pressure of 1 ton, and then used. An SB9 cell manufactured by EC FRONTIER CO., LTD. was used for the evaluation cell, a glass filter manufactured by Advantec Co., Ltd. was used for the separator, and Ag/AgCl was used for the reference electrode.

### 2.2 Method for Evaluating Cell

A full cell was formed so that the capacity ratio of negative electrode/positive electrode was 3 or more, and charge-discharge evaluation was performed with control at a cut potential on the positive electrode side of 0.0 ± 1.05 V vs. SHE or a capacity cut of 200 mAh/g at a current value of ± 0.1 C at a positive electrode capacity of 200 mAh/g. The evaluation was carried out in a constant-temperature bath at 25°C.

### 2.3 Evaluation Results

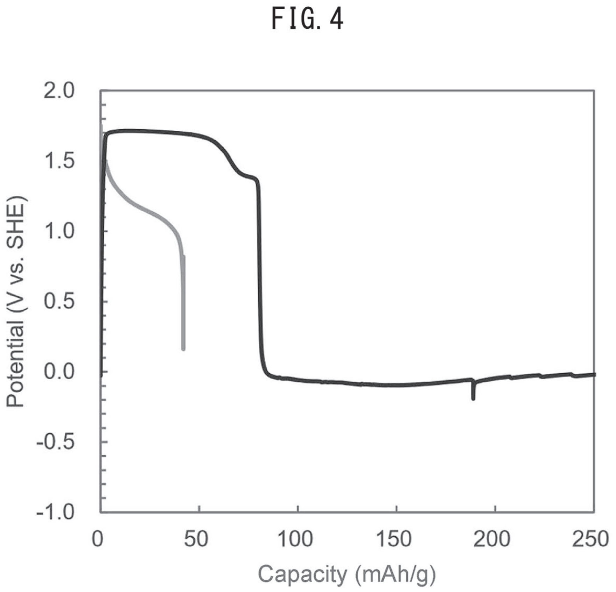

FIG. 4 shows a charge-discharge curve of an evaluation cell using the aqueous electrolyte solution of Comparative Example 5. As shown in FIG. 4, deterioration of the voltage due to elution of Al was confirmed when a reaction by about 50 mAh/g on the charge side occurred.

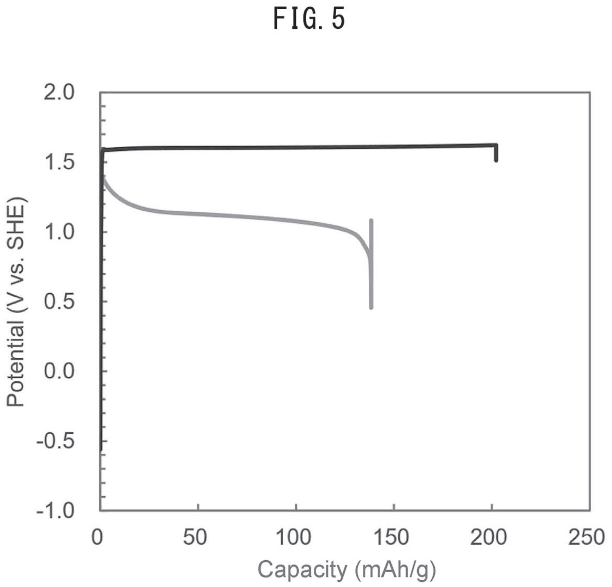

FIG. 5 shows a charge-discharge curve of an evaluation cell using the aqueous electrolyte solution of Example 48. As shown in FIG. 5, there was not observed any abnormality on the charge side and it was confirmed that stable charge-discharge was possible.

### 3. Conclusion

It can be said from the foregoing results that an aqueous battery including the following structures can inhibit Al from being eluted from a current collector containing Al to an aqueous electrolyte solution.
(1) The aqueous battery includes a positive electrode, an aqueous electrolyte solution and a negative electrode.
(2) One or both of the positive electrode and the negative electrode has/have a current collector containing Al.
(3) The current collector is in contact with the aqueous electrolyte solution.
(4) The aqueous electrolyte solution contains water, potassium polyphosphate dissolved in the water, and a silicic acid salt dissolved in the water.

### REFERENCE SIGNS LIST

10 positive electrode
11 positive electrode active material layer
12 positive electrode current collector
20 aqueous electrolyte solution
30 negative electrode
31 negative electrode active material layer
32 negative electrode current collector
40 separator
100 aqueous battery

## Claims

1. An aqueous battery comprising a positive electrode, an aqueous electrolyte solution and a negative electrode, wherein
one or both of the positive electrode and the negative electrode has/have a current collector containing Al,
the current collector is in contact with the aqueous electrolyte solution, and
the aqueous electrolyte solution contains
water,
potassium polyphosphate dissolved in the water, and
a silicic acid salt dissolved in the water.

2. The aqueous battery according to claim 1, wherein
the silicic acid salt is a metasilicic acid salt.

3. The aqueous battery according to claim 1, wherein
the silicic acid salt is potassium metasilicate.

4. The aqueous battery according to any one of claims 1 to 3, wherein
the aqueous electrolyte solution contains at least one of orthophosphoric acid, metaphosphoric acid and carboxylic acid dissolved in the water.

5. The aqueous battery according to any one of claims 1 to 4, wherein
the aqueous electrolyte solution contains the potassium polyphosphate dissolved at a concentration of 1 mol or more per 1 kg of the water.

6. The aqueous battery according to any one of claims 1 to 5, wherein
the aqueous electrolyte solution has no freezing point at -40°C or higher.

7. The aqueous battery according to any one of claims 1 to 6, wherein
the aqueous electrolyte solution does not involve salt precipitation when cooled from 0°C to - 40°C.

8. The aqueous battery according to any one of claims 1 to 7, wherein
the aqueous electrolyte solution has a viscosity of 10 mPa·s or more and 400 mPa·s or less at 25°C.

9. The aqueous battery according to any one of claims 1 to 8, wherein
a pH of the aqueous electrolyte solution is 3 or more and 13 or less.

10. The aqueous battery according to any one of claims 1 to 9, wherein
at least the positive electrode has the current collector.

11. The aqueous battery according to any one of claims 1 to 10, having a bipolar structure, wherein
a positive electrode active material layer is formed on one side of the current collector and a negative electrode active material layer is formed on the other side of the current collector.
